# EUROPEAN PATENT SPECIFICATION

(11) **EP 0 946 088 B1**
(45) Date of publication and mention of the grant of the patent: **26.03.2003**
(21) Application number: 98932636.8
(22) Date of filing: 09.07.1998
(51) Int. Cl.: A01J 5/017, A01J 7/04, A01J 7/02

(54) **A CONSTRUCTION INCLUDING AN IMPLEMENT FOR AUTOMATICALLY MILKING ANIMALS**
VORRICHTUNG MIT EINEM GERÄT ZUM AUTOMATISCHEN MELKEN VON TIEREN
STRUCTURE CONTENANT UNE MACHINE A TRAIRE AUTOMATIQUE

(30) Priority: 17.07.1997 NL 1006607
(43) Date of publication of application: 06.10.1999
(60) Divisional application: 02078416.1
(73) Proprietor: MAASLAND N.V., 3155 PD Maasland (NL)
(72) Inventor: VAN DER LELY, Cornelis, CH-6300 Zug (CH); VAN DER LELY, Olaf, CH-6300 Zug (CH)
(74) Representative: Corten, Maurice Jean F.M.
(86) International application number: PCT/NL98/00398
(87) International publication number: WO 99/003331

(56) References cited:
- EP-A- 0 630 558
- EP-A- 0 643 910
- EP-A- 0 728 412
- WO-A-96/13151

## Description

The invention relates to a construction according the preamble of claim 1.

Such a construction is known from the European patent application EP0728412-A1. In this document a milkbox is described with an implement for milking animals which implement comprises teat cups being connectable to the teats of an animal to be milked. Separate cups are provided for performing a cleaning action or for foremilking the animal. Gripping means are available to connect the teat cups and the separate cups to the teats of the animal. With such a construction it is important to work very hygienically so that a high milk quality is obtained.

It is the object of invention to provide an alternative construction of the above mentioned art which still works in a very hygienically way.

This is achieved by the features of the characterizing part of claim 1.

According to a further inventive feature, the construction is characterized that by means of the separate cups the teats can be cleaned and/or foremilked and/or disinfected and/or stimulated. In this manner cleaning fluid and/or other contaminations are prevented from being mixed with the milk to be yielded thereafter.

According a further inventive feature, the implement is provided with a first cleaning device for cleaning the teat cups.

According to a further inventive feature, the first and the second cleaning device respectively comprise a space in which the teat cups and the separate cups respectively are cleaned with fluid and/or air.

In a preferred embodiment of the invention, the first cleaning device is located at one longitudinal side of the milk box, while the second cleaning device is situated at the other longitudinal side. In this manner there is worked very hygienically, which has a favourable influence on the milk quality.

In order to prevent cleaning fluid from splashing away, according to an inventive feature, the first and the second cleaning device comprise a space in which the teat cups and the separate cups respectively can be cleaned.

According to again another inventive feature, in both spaces of the cleaning devices there are disposed storage means for storing the teat cups and the separate cups after operation. This prevents the teat cups and the separate cups from being contaminated.

In order to facilitate the connection of separate cups, according to an inventive feature, the separate cups have a larger diameter than the teat cups.

The separate cups preferably have a diameter being approximately one and a half times as large as the diameter of the teat cups.

For the purpose of realizing a proper connection of the separate cups to the teats, according to a further inventive feature, the separate cups are provided near their upper sides with an enlarged contact face with which they are situated against the udder of an animal.

For the purpose of a further automation of the implement, according to an inventive feature, the implement comprises a milking robot for the teat cups and a robot for the separate cups, with the aid of which robots the teat cups and the separate cups respectively can be connected to the teats of an animal.

For determining the position of the teats, according to an inventive feature, the implement comprises a further robot with a detector disposed thereon.

According to an inventive feature, the detector comprises a laser and/or an ultrasonic sensor and/or a camera.

The invention further relates to a method for automatically milking animals, such as cows, comprising the step of attaching teat cups to the teats of an animal for milking the animal, and the step of attaching separate cups to the teats of an animal for performing another function and by means of the separate cups the teats can be cleaned and/or foremilked and/or disinfected and/or stimulated,
characterized in that, the method comprises the step of cleaning the separate cups.

According an inventive feature, the method comprises the step of cleaning the teat cups.

For the purpose of an efficient way of working, according to an inventive feature of the method according the invention, the step of cleaning the teat cups takes place during performing of the other function with the separate cups as well as that the step of cleaning the separate cups takes place during the step of milking the animal with the teat cups.

According a further inventive feature, the method subsequently comprises the steps of:
- determining the position of the teats of the animal;
- attaching the separate cups to the teats;
- cleaning and/or disinfecting and/or stimulating and/or foremilking the teats;
- cleaning and/or disinfecting the separate cups;
- during cleaning and/or disinfecting the separate cups attaching the teat cups to the teats;
- cleaning and/or disinfecting the teat cups.

According to again a further inventive feature, there is determined per animal or per group of animals which operations are performed on the animal (s). In this way there can be recorded per animal or per group of animal whether the teats are stimulated by means of the teat cups or the separate cups and by means of which cups foremilking takes place.

The invention will now be explained in further detail with reference to the accompanying drawing.

The invention will now be explained in further detail with reference to the accompanying drawing.

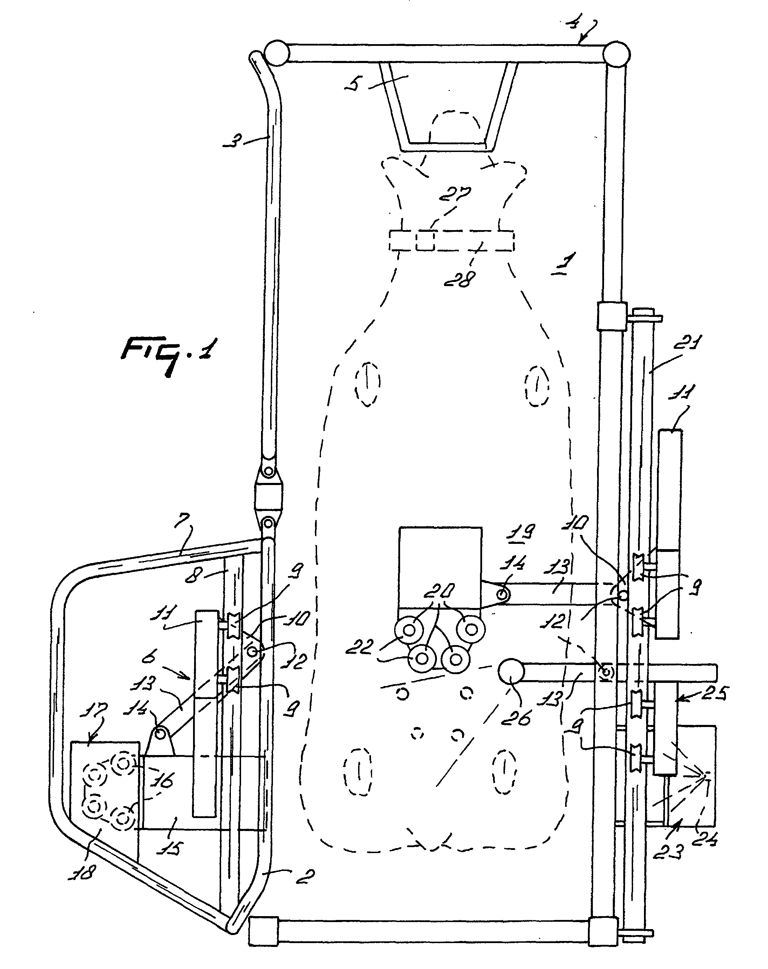

Figure 1 shows schematically a plan view of a milk box, a robot arm with teat cups and a robot arm with separate cups being disposed therein.

Figure 1 shows a plan view of a milk box 1 provided with an entrance door 2 and an exit door 3. Near the front side of the milk box 1, a feed trough 5 is fitted to the frame 4, in which feed trough 5 fodder, such as concentrate, can be fed to an animal present in the milk box 1.

To the entrance door 2 there is fitted a milking robot 6. The milking robot 6 is surrounded by a U-shaped protective bracket 7 which is disposed on the entrance door 2. Between the two legs of the U-shaped protective bracket 7 there is disposed a longitudinal guide means 8 extending in the longitudinal direction of the milk box 1 and along which the milking robot 6 can be moved via a pair of rollers 9 by a (non-shown) motor, preferably a stepper motor. The milking robot 6 comprises a first robot arm 10 which is fastened to a support beam 11 to which the rollers 9 are attached. The first robot arm 10 is hingeably connected to a second robot arm 13 via a vertical axis 12. The second robot arm 13 itself is hingeably connected about a vertical axis 14 to a third robot arm 15 carrying four teat cups 16 at one of its ends. In the position shown in Figure 1 the teat cups 16 are inoperative. The first, second and third robot arms 10; 13; 15 can be rotated relative to each other by (non-shown) motors, such as stepper motors and/or pneumatic or hydraulic, possibly servo-controlled cylinders. The milking robot 6 can further be moved in height by a (non-shown) hingeable arm construction.

To the U-shaped protective bracket 7 there is further fitted a first cleaning device 17 for cleaning of the teat cups. The first cleaning device 17 comprises a box-shaped housing 18 in which the teat cups 16 can be cleaned by means of fluid and/or air.

Near the other longitudinal side of the milk box 1 there is arranged a robot 19 with separate cups 20 which are capable of being connected to the animal's teats which can thus be cleaned and/or disinfected and/or foremilked and/or stimulated to give milk. Like the previous milking robot 6, the robot 19 is movable via a longitudinal guide means 21 which is fastened to the frame 4 of the milk box 1 and extends in the longitudinal direction of the milk box 1. Apart from the cups 20, the robot 19 is designed in the same manner and therefore indicated in Figure 1 by the same reference numerals. The separate cups 20 have a larger diameter, preferably one and a half times as large as the teat cups 16. Each of the separate cups 20 is further provided with a relatively large contact face 22 with which the cup, when it is connected to a teat, is situated against the udder of the animal. The large contact face 22 ensures that the interior space of the separate cup 20 is properly shut off from the environmental atmosphere.

Near the same longitudinal side as where the robot 19 is arranged, near the rear side of the milk box 1 there is disposed a second cleaning device 23 for cleaning and/or disinfecting the separate cups 20. Like the first cleaning device 17, the second cleaning device 23 is provided with a box-shaped housing 18 with a cleaning member 24 disposed therein by means of which cleaning member 24 water, air or disinfecting fluid can be spouted both into and against the separate cups 20.

To the longitudinal guide means 21 there is fitted a further robot 25 in a similar manner as the robot 19. Therefore, corresponding parts are indicated by the same reference numerals. At the end of the arm 13 of the further robot 25 there is fitted a detector 26 with the aid of which the position of the teats of an animal can be determined. The detector 26 comprises a (non-shown) laser.

For the purpose of identifying the animal present in the milk box 1, the implement comprises a (non-shown) animal identification system and a computer which are capable of cooperating with a data carrier 27 which is disposed around the neck of the animal via a collar 28.

The above described implement functions as follows:

The animal can enter the milk box 1 via the entrance door 2, whereafter the animal is identified by means of the (non-shown) animal identification system. If there has been established that the animal is to be milked and/or to be foremilked and/or the animal's teats are to be cleaned, there is fed to the animal a dosaged quantity of concentrate in the feed trough 5 via a (non-shown) concentrate dosage system. Then, by means of the further robot 25, the position of the teats of the animal is determined. Thereafter the robot 19 is activated and the separate cups 20 are connected to the teats of the animal. Depending on how the computer is preprogrammed the animal can subsequently be cleaned and/or disinfected and/or stimulated and/or foremilked by means of the separate cups 20. Thereafter the separate cups 20 are moved to the second cleaning device 23 and (non-shown) switch means are operated by the computer, in such a manner that the separate cups 20 are cleaned and/or disinfected by means of the second cleaning device 23. During cleaning of the separate cups 20 the milking robot 6 is activated and the teat cups 16 are connected to the teats of the animal to be milked, whereafter the animal is milked. When there has been established by the computer that the animal has been milked, the teat cups 16 are moved to the first cleaning device 17 with the aid of the milking robot 6. Subsequently the switch means are activated again by the computer, in such a manner that the teat cups 16 are cleaned and/or disinfected. It is also possible to adjust the switch means in such a manner that both the teat cups 16 and the separate cups 20 are cleaned by air and/or blown dry. Cleaning and/or disinfecting or blowing dry or blowing clean of the teat cups 16 can go on, even when the entrance door 2 is opened for a next animal.

## Claims

1. A construction including an implement for automatically milking animals, such as cows, which implement comprises teat cups (16) which are capable of being connected to the teats of an animal to be milked, and which implement comprises separate cups (20) having another function than teat cups and which can be connected to the teats of an animal and means of the separate cups (20) the teats can be cleaned and/or foremilked and/or disinfected and/or stimulated, **characterized in that** the implement comprises a cleaning device (23) for cleaning the separate cups (20).

2. A construction as claimed in claim 1, **characterized in that** the implement is provided with a first cleaning device (17) for cleaning the teat cups (16).

3. A construction as.claimed in claim 2, **characterized in that** the first cleaning device (17) and the second cleaning device (23) respectively comprise a space in which the teat cups (16) and the separate cups (20) respectively are cleaned with fluid and/or air.

4. A construction as claimed in claim 2 or 3, **characterized in that** the first cleaning device (17) is located at one longitudinal side of a milk box (1), while the second cleaning device (23) is situated at the other longitudinal side.

5. A construction as claimed in claim 3 or 4 dependent on claim 4, **characterized in that** in both spaces there are disposed storage means for storing the teat cups (16) and the separate cups (20) after operation.

6. A construction as claimed in any of the preceding claims, **characterized in that** the separate cups (20) have a larger diameter than the teat cups (16).

7. A construction as claimed in claim 6, **characterized in that** the diameter of the separate cups (20) is approximately one and a half times as large as the diameter of the teat cups (16).

8. A construction as claimed in any one of the preceding claims, **characterized in that** the separate cups (20) are provided near their upper sides with an enlarged contact face with which the separate cups (20) are situated against the udder of the animal when they are connected to the teats.

9. A construction as claimed in any one of the preceding claims, **characterized in that** the implement comprises a milking robot (6) for the teat cups (16) and a robot (19) for the separate cups (20).

10. A construction as claimed in any one of the preceding claims, **characterized in that** the implement comprises a further robot (25) with a detector (26) disposed thereon for determining the position of the teats.

11. A construction as claimed in claim 10, **characterized in that** the detector (26) comprises a laser and/or an ultrasonic sensor and/or a camera.

12. A method for automatically milking animals, such as cows, the method comprising the step of attaching teat cups (16) to the teats of an animal for milking the animal, and the step of attaching separate cups (20) to the teats of an animal for performing another function and means of the separate cups (20) the teats can be cleaned and/or foremilked and/or disinfected and/or stimulated, **characterized in that**, the method comprises the step of cleaning the separate cups (20).

13. A method as claimed in claim 12, **characterized in that** the method comprises the step of cleaning the teat cups (16).

14. A method as claimed in claim 12 or 13, **characterized in that** the step of cleaning the separate cups (20) takes place during the step of milking the animal with the teat cups (16).

15. A method as claimed in claim 13 or 14 dependent on claim 14, **characterized in that** the step of cleaning the teat cups (16) takes place during performing of the other function with the separate cups (20).

16. A method as claimed in any of the preceding claims, **characterized in that** the method subsequently comprises the steps of:
- determining the position of the teats of the animal;
- attaching the separate cups (20) to the teats;
- cleaning and/or disinfecting and/or stimulating and/or foremilking the teats;
- cleaning and/or disinfecting the separate cups (20);
- during cleaning and/or disinfecting the separate cups (20) attaching the teat cups (16) to the teats;
- cleaning and/or disinfecting the teat cups (16).

17. A method as claimed in any one of claims 12 to 16, **characterized in that**, there is determined per animal or per group of animals which operations are performed on the animal(s).

## Patentansprüche

1. Anlage mit einer Vorrichtung zum automatischen Melken von Tieren, wie z. B. Kühen, wobei die Vorrichtung Zitzenbecher (16) umfaßt, die an die Zitzen eines zu melkenden Tieres anschließbar sind, und wobei die Vorrichtung separate Becher (20) umfaßt, die eine andere Funktion als Zitzenbecher haben und an die Zitzen eines Tieres anschließbar sind, und wobei die Zitzen mittels der separaten Becher (20) gereinigt und/oder vorgemolken und/oder desinfiziert und/oder stimuliert werden können,
**dadurch gekennzeichnet, daß** die Vorrichtung eine Reinigungsvorrichtung (23) zum Reinigen der separaten Becher (20) umfaßt.

2. Anlage nach Anspruch 1,
**dadurch gekennzeichnet, daß** die Vorrichtung mit einer ersten Reinigungsvorrichtung (17) zum Reinigen der Zitzenbecher (16) versehen ist.

3. Anlage nach Anspruch 2,
**dadurch gekennzeichnet, daß** die erste Reinigungsvorrichtung (17) und die zweite Reinigungsvorrichtung (23) jeweils einen Raum umfassen, in dem die Zitzenbecher (16) bzw. die separaten Becher (20) mit Flüssigkeit und/oder Luft gereinigt werden.

4. Anlage nach Anspruch 2 oder 3,
**dadurch gekennzeichnet, daß** die erste Reinigungsvorrichtung (17) an einer Längsseite einer Melkbox (1) angeordnet ist, während die zweite Reinigungsvorrichtung (23) an der anderen Längsseite angebracht ist.

5. Anlage nach Anspruch 3 oder 4, soweit abhängig von Anspruch 4,
**dadurch gekennzeichnet, daß** in beiden Räumen Aufnahmevorrichtungen zum Aufnehmen der Zitzenbecher (16) und der separaten Becher (20) nach dem Betrieb angeordnet sind.

6. Anlage nach einem der vorhergehenden Ansprüche,
**dadurch gekennzeichnet, daß** die separaten Becher (20) einen größeren Durchmesser als die Zitzenbecher (16) haben.

7. Anlage nach Anspruch 6,
**dadurch gekennzeichnet, daß** der Durchmesser der separaten Becher (20) etwa das Eineinhalbfache des Durchmessers der Zitzenbecher (16) beträgt.

8. Anlage nach einem der vorhergehenden Ansprüche,
**dadurch gekennzeichnet, daß** die separaten Becher (20) nahe ihren Oberseiten mit einer vergrößerten Kontaktfläche versehen sind, mit der die separaten Becher (20) an dem Euter des Tieres anliegen, wenn sie an die Zitzen angeschlossen sind.

9. Anlage nach einem der vorhergehenden Ansprüche,
**dadurch gekennzeichnet, daß** die Vorrichtung einen Melkroboter (6) für die Zitzenbecher (16) und einen Roboter (19) für die separaten Becher (20) umfaßt.

10. Anlage nach einem der vorhergehenden Ansprüche,
**dadurch gekennzeichnet, daß** die Vorrichtung einen weiteren Roboter (25) mit einem auf ihm angeordneten Detektor (26) zum Ermitteln der Position der Zitzen umfaßt.

11. Anlage nach Anspruch 10,
**dadurch gekennzeichnet, daß** der Detektor (26) einen Laser und/oder einen Ultraschallsensor und/oder eine Kamera umfaßt.

12. Verfahren zum automatischen Melken von Tieren, wie z. B. Kühen, wobei das Verfahren den Verfahrensschritt des Anschließens von Zitzenbechern (16) an die Zitzen eines Tieres zum Melken des Tieres und den Verfahrensschritt des Anschließens von separaten Bechern (20) an die Zitzen eines Tieres zur Ausübung einer anderen Funktion umfaßt, und wobei die Zitzen mittels der separaten Becher (20) gereinigt und/oder vorgemolken und/oder desinfiziert und/oder stimuliert werden können,
**dadurch gekennzeichnet, daß** das Verfahren den Verfahrensschritt des Reinigens der separaten Becher (20) umfaßt.

13. Verfahren nach Anspruch 12,
**dadurch gekennzeichnet, daß** das Verfahren den Verfahrensschritt des Reinigens der Zitzenbecher (16) umfaßt.

14. Verfahren nach Anspruch 12 oder 13,
**dadurch gekennzeichnet, daß** der Verfahrensschritt des Reinigens der separaten Becher (20) während des Verfahrensschrittes des Melkens des Tieres mit den Zitzenbechern (16) durchgeführt wird.

15. Verfahren nach Anspruch 13 oder 14, soweit abhängig von Anspruch 14,
**dadurch gekennzeichnet, daß** der Verfahrensschritt des Reinigens der Zitzenbecher (16) während der Ausübung der anderen Funktion mit den separaten Bechern (20) durchgeführt wird.

16. Verfahren nach einem der vorhergehenden Ansprüche,
**dadurch gekennzeichnet, daß** das Verfahren danach die folgenden Verfahrensschritte umfaßt:
- Ermitteln der Position der Zitzen des Tieres;
- Anbringen der separaten Becher (20) an die Zitzen;
- Reinigen und/oder Desinfizieren und/oder Stimulieren und/oder Vormelken der Zitzen;
- Reinigen und/oder Desinfizieren der separaten Becher (20) ;
- während des Reinigens und/oder Desinfizierens der separaten Becher (20) Anbringen der Zitzenbecher (16) an die Zitzen;
- Reinigen und/oder Desinfizieren der Zitzenbecher (16).

17. Verfahren nach einem der Ansprüche 12 bis 16,
**dadurch gekennzeichnet, daß** für jedes Tier oder für jede Gruppe von Tieren festgelegt wird, welche Maßnahmen an dem/den Tier(en) durchgeführt werden.

## Revendications

1. Structure comprenant un dispositif pour traire automatiquement des animaux, comme des vaches, lequel dispositif comprend des gobelets trayeurs (16) qui peuvent être connectés aux trayons d'un animal à traire, et lequel dispositif comprend des gobelets séparés (20) ayant une fonction autre que celle des gobelets trayeurs et pouvant être connectés aux trayons d'un animal, gobelets séparés (20) au moyen desquels les trayons peuvent être nettoyés et/ou peuvent donner les premiers jets de lait et/ou être stimulés, **caractérisée en ce que** le dispositif comprend un dispositif de nettoyage (23) pour nettoyer les gobelets séparés (20).

2. Structure selon la revendication 1, **caractérisée en ce que** le dispositif est muni d'un premier dispositif de nettoyage (17) pour nettoyer les gobelets trayeurs (16).

3. Structure selon la revendication 2, **caractérisée en ce que** le premier dispositif de nettoyage (17) et le second dispositif de nettoyage (23) comprennent respectivement un espace dans lequel les gobelets trayeurs (16) et les gobelets séparés (20) sont respectivement nettoyés avec du fluide et/ou de l'air.

4. Structure selon la revendication 2 ou 3, **caractérisée en ce que** le premier dispositif de nettoyage (17) est situé sur un côté longitudinal d'un box de traite (1), tandis que le second dispositif de traite (23) est situé sur l'autre côté longitudinal.

5. Structure selon la revendication 3 ou 4 dépendant de la revendication 4, **caractérisée en ce que** dans les deux espaces sont disposés des moyens de stockage pour stocker les gobelets trayeurs (16) et les gobelets séparés (20) après fonctionnement.

6. Structure selon l'une quelconque des revendications précédentes, **caractérisée en ce que** les gobelets séparés (20) présentent un diamètre plus grand que les gobelets trayeurs (16).

7. Structure selon la revendication 6, **caractérisée en ce que** le diamètre des gobelets séparés (20) est environ une fois et demie plus grand que le diamètre des gobelets trayeurs (16).

8. Structure selon l'une quelconque des revendications précédentes, **caractérisée en ce que** les gobelets séparés (20) sont munis à proximité de leur côté supérieur d'une face de contact agrandie avec laquelle les gobelets séparés (20) se placent contre la mamelle de l'animal lorsqu'ils sont connectés aux trayons.

9. Structure selon l'une quelconque des revendications précédentes, **caractérisée en ce que** le dispositif comprend un robot de traite (6) pour les gobelets trayeurs (16) et un robot (19) pour les gobelets séparés (20).

10. Structure selon l'une quelconque des revendications précédentes, **caractérisée en ce que** le dispositif comprend un robot supplémentaire (25) avec un capteur (26) disposé sur celui-ci dans le but de déterminer la position des trayons.

11. Structure selon la revendication 10, **caractérisée en ce que** le détecteur (26) comprend un laser et/ou un capteur ultrasonore et/ou une caméra.

12. Procédé pour traire automatiquement des animaux, comme des vaches, le procédé comprenant l'étape consistant à fixer des gobelets trayeurs (16) aux trayons d'un animal pour traire l'animal, et l'étape consistant à fixer des gobelets séparés (20) aux trayons d'un animal pour remplir une autre fonction, gobelets séparés (20) au moyen desquels les trayons peuvent être nettoyés et/ou peuvent donner les premiers jets de lait et/ou être stimulés, **caractérisé en ce que** le procédé comprend l'étape consistant à nettoyer les gobelets séparés (20).

13. Procédé selon la revendication 12, **caractérisée en ce que** le procédé comprend l'étape consistant à nettoyer les gobelets trayeurs (16).

14. Procédé selon la revendication 12 ou 13, **caractérisé en ce que** l'étape consistant à nettoyer les gobelets séparés (20) se déroule durant l'étape consistant à traire l'animal avec les gobelets trayeurs (16).

15. Procédé selon la revendication 13 ou la revendication 14 dépendant de la revendication 14, **caractérisé en ce que** l'étape consistant à nettoyer les gobelets trayeurs (16) se déroule pendant que l'autre fonction est effectuée par les gobelets séparés (20).

16. Procédé selon l'une quelconque des revendications précédentes, **caractérisé en ce que** le procédé comprend ensuite les étapes consistant à :
- déterminer la position des trayons de l'animal ;
- fixer les gobelets séparés (20) aux trayons ;
- nettoyer et/ou désinfecter et/ou stimuler et/ou tirer les premiers jets de lait ;
- nettoyer et/ou désinfecter les gobelets séparés (20) qui fixent les gobelets trayeurs (16) aux trayons ;
- nettoyer et/ou désinfecter les gobelets trayeurs (16).

17. Procédé selon l'une quelconque des revendications 12 à 16, **caractérisé en ce que** sont déterminées par animal ou par groupe d'animaux les opérations qui sont effectuées sur l'animal ou sur les animaux.
